(19) Europäisches Patentamt
European Patent Office
Office européen des brevets

(11) EP 2 443 220 B1

(12) EUROPEAN PATENT SPECIFICATION

(45) Date of publication and mention of the grant of the patent:
**21.08.2013 Bulletin 2013/34**

(21) Application number: **10721409.0**

(22) Date of filing: **07.05.2010**

(51) Int Cl.:
***D06P 1/00*** (2006.01) ***C11D 3/40*** (2006.01)
***C11D 3/37*** (2006.01) ***D06L 3/12*** (2006.01)

(86) International application number:
**PCT/EP2010/056230**

(87) International publication number:
**WO 2010/145887 (23.12.2010 Gazette 2010/51)**

(54) **DETERGENT COMPOSITION COMPRISING ANIONIC DYE POLYMER**

WASCHMITTELZUSAMMENSETZUNG ENTHALTEND ANIONISCHES FARBSTOFFPOLYMER

COMPOSITION DÉTERGENTE COMPRENANT UN POLYMÊRE COLORANT ANIONIQUE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.06.2009 EP 09162671**

(43) Date of publication of application:
**25.04.2012 Bulletin 2012/17**

(73) Proprietors:
- **Unilever PLC**
**London, Greater London EC4Y 0DY (GB)**
Designated Contracting States:
**CY GB IE MT**
- **Unilever NV**
**3013 AL Rotterdam (NL)**
Designated Contracting States:
**AL AT BE BG CH CZ DE DK EE ES FI FR GR HR HU IS IT LI LT LU LV MC MK NL NO PL PT RO SE SI SK SM TR**

(72) Inventors:
- **BATCHELOR, Stephen, Norman**
**Wirral**
**Merseyside CH63 3JW (GB)**
- **BIRD, Jayne, Michelle**
**Wirral**
**Merseyside CH63 3JW (GB)**
- **CHEN, Wei**
**Shanghai 200335 (CN)**
- **TAO, Qingsheng**
**Shanghai 200335 (CN)**
- **WANG, Jinfang**
**Shanghai 200335 (CN)**

(74) Representative: **Avila, David Victor**
**Unilever Patent Group**
**Colworth House**
**Sharnbrook**
**Bedford**
**MK44 1LQ (GB)**

(56) References cited:
**US-A- 3 232 691 US-A- 4 554 091**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF INVENTION

The present invention relates to the delivery of dyes polymers to fabrics.

### BACKGROUND OF THE INVENTION

WO2005/003274, to Unilever, discloses that shading dyes may be included in detergent formulations to enhance the whiteness of garments.

WO2006/055787 and WO2009/040731, to Proctor and Gamble, discloses anionic reactive dyes bound to polysaccharide polymers for use in laundry formulations. The reactive dyes used are negatively charged. The shading benefit is found predominately on cellulosic garments. It is synthetically difficult and expensive to make such polymers with high dye levels incorporated.

US 3232691 discloses an industrial process for simultaneous dyeing and finishing of textiles with a various coloured polymeric dyes in a dispersion; The process requires a heat treatment above 100 °C. The dying process disclosed in US 3232691 is permanent.

### SUMMARY OF THE INVENTION

The present invention provides dye polymers having dye moieties carrying negatively charged groups. The dye polymers are relatively easy to make and weight effective for shading fabrics. The dye polymers may carry high levels of dye. The dye polymers are labile from cellulosic fabrics and do not build up substantially with the number of washes.

In one aspect the present invention provides a laundry detergent composition comprising from 2 to 70 wt % of a surfactant together with from 0.0001 to 50 wt%, preferably 0.0005 to 10 wt%, of a blue or violet dye-polymer of molecular weight of at least 500, wherein the dye-polymer is obtainable by polymerisation of:

(a) a dye monomer, the dye monomer comprising an alkene covalently bound to a dye, the dye being covalently bound to a group selected from: $SO_3^-$ and $CO_2^-$, the dye monomer having a molar extinction coefficient at a wavelength in the range 400 to 700nm, preferably 500 to 650nm, most preferably 540 to 600nm, of at least 1000 $mol^{-1}$ L $cm^{-1}$, preferably greater than 4000 $mol^{-1}$ L $cm^{-1}$, and

(b) one or more further alkene comonomer(s), the alkene monomer(s) having molar extinction coefficient at a wavelength in the range 400 to 700nm that is less than 100 $mol^{-1}$ L $cm^{-1}$, preferably less than 10 $mol^{-1}$ L $cm^{-1}$.

The dye monomer has at least one $SO_3^-$ and/or $CO_2^-$ group. The dye monomer may have more than one $SO_3^-$ and/or $CO_2^-$ group. Preferably the dye monomer has one, two or three $SO_3^-$ groups. When the dye monomer is an anthraquinone it preferably carries only one $SO_3^-$.

The dye-polymer may be derived from a mixture of different dye monomer, for example carrying different dye chromophores.

In another aspect the present invention provides a domestic method of treating a textile, the method comprising the steps of:

(i) treating a textile with an aqueous solution of the dye-polymer, the aqueous solution comprising from 10 ppb to 100 ppm of the dye-polymer (preferably 0.1 to 5ppm, most preferably 0.5 to 2ppm); and, from 0.3 g/L to 3 g/L, preferably 0.3 to 2 g/L, of a surfactant;
(ii) optionally rinsing; and,
(iii) drying the textile.

### DETAILED DESCRIPTION OF THE INVENTION

The detergent composition as described herein is most preferably a granular detergent composition.

### DYE MONOMER

The dye monomer is an organic molecule which when dissolved in an organic solvent has a molar absorption extinction coefficient of at least 1000 $mol^{-1}$ L $cm^{-1}$, preferably greater than 4000 $mol^{-1}$ L $cm^{-1}$ at a wavelength in the range 400 to 700nm, preferably 500 to 650nm, most preferably 540 to 600nm.

Molar absorption coefficients are preferably measured in an organic solvent, preferably propan-2-ol, using a 1, 5 or 10 cm cell.

Dyes are described in Industrial Dyes (K.Hunger ed, Wiley VCH 2003, ISBN 3-527-30426-6). Named dyes are those as found in the Color Index; ©2009 Society of Dyers and Colburists and American Association of Textile Chemists and Colorists.

Preferably, the dye monomer is of the form:

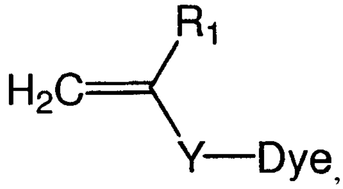

wherein Y is an organic bridging group covalently connecting a dye to the alkene moiety of the dye monomer and $R_1$ is selected from: alkyl; aryl; benzyl; halogen; ester; acid amide; and, CN. Preferably, when $R_1$ is a phenyl or benzyl group, the aromatic is not substituted by OH.

Preferably, the Y group is bound directly to a carbon atom of an aromatic ring of the dye.

Preferably, the most direct connection (Y) of an aromatic group of the dye to the alkene carbon carrying $R_1$ is spaced by 1 to 8 atoms, most preferably 3 to 6; the atoms are preferably selected from: C; N; O; and, S. The alkene may also be directly connected to the dye and in this case Y is absent.

Preferably, the organic bridging group is selected from: - $CONR_4$-; -$NR_4CO$-; -$COOR_4$-;-$NR_4$-; -O-; -S-; -$SO_2$-; -$SO_2NR_4$-; - N($COR_4$)-; and -N($SO_2R_4$)-; wherein $R_4$ is selected from: H; C1-C6 branched or linear alkyl; phenyl and benzyl groups; wherein R4 has 0 to 1 spacing units selected from: -O-; -S-; -$SO_2$-; -C (O) O-; -OC(O)-; and an amine. Preferably, the organic bridging group is -$NR_4CO$-. $R_4$ is preferably selected: from: H and Me.

The chromophore of the organic dye is preferably selected from the following chromophore classes: anthraquinone; azo; azine; triphenodioxazine; triphenyl methane; xanthene; and, phthalocyanin; most preferred are azo; anthraquinone; and, azine chromophore classes.

$R_1$ is preferably selected from: H; Me; Et; Pr; $CO_2$Cl-C4 branched and linear alkyl chains; phenyl; benzyl; CN; Cl; and, F. More preferably, $R_1$ is selected from: H; and, Me.

It is most preferred that the dye-monomer is selected from: acid violet 1; acid violet 3; acid violet 6; acid violet 11; acid violet 13; acid violet 14; acid violet 19; acid violet 20; acid violet 36; acid violet 36:1; acid violet 41; acid violet 42; acid violet 43; acid violet 50; acid violet 51; acid violet 63; acid violet 48; acid blue 25; acid blue 40; acid blue 40:1; acid blue 41; acid blue 43; acid blue 45; acid blue 47; acid blue 49; acid blue 51; acid blue 53; acid blue 56; acid blue 61; acid blue 61:1; acid blue 62; acid blue 69; acid blue 78; acid blue 81:1; acid blue 92; acid blue 96; acid blue 108; acid blue 111; acid blue 215; acid blue 230; acid blue 277; acid blue 344; acid blue 117; acid blue 124; acid blue 129; acid blue 129:1; ; acid blue 138; acid blue 145; direct violet 99; direct violet 5; direct violet 72; direct violet 16; direct violet 78; direct violet 77; direct violet 83; food black 2; direct blue 33; direct blue 41; direct blue 22; direct blue 71; direct blue 72; direct blue 74; direct blue 75; direct blue 82; direct blue 96; direct blue 110; direct blue 111; direct blue 120; direct blue 120:1; direct blue 121; direct blue 122; direct blue 123; direct blue 124; direct blue 126; direct blue 127; direct blue 128; direct blue 129; direct blue 130; direct blue 132; direct blue 133; direct blue 135; direct blue 138; direct blue 140; direct blue 145; direct blue 148; direct blue 149; direct blue 159; direct blue 162; direct blue 163; and, food black 1 where the acid amide group is replaced by $NH_2$, wherein the one -NH2 of the dye is converted to -NH-C(O)-CH=CH2 or -NH-C(O)-C(Me)=CH2. The present invention extends to these dye monomers *per se.*

A preferred class of dye-monomer is selected from the anthraquinione:

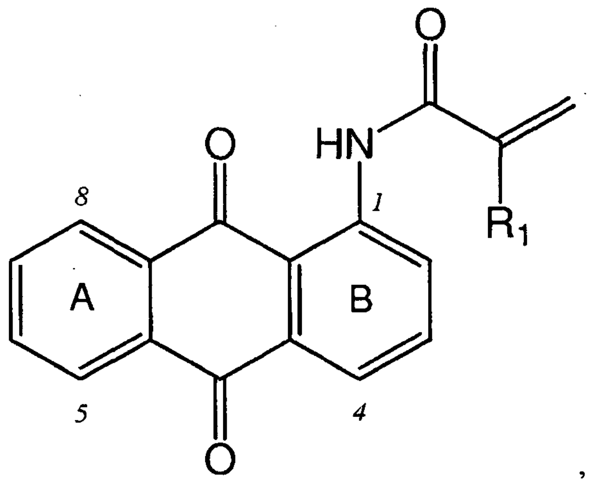

,

wherein the anthraquinione carries at least one sulphonate.

Of this anthraquinione class it is preferred that the A and B ring are further substituted by one or more groups selected from: $NH_2$; NHAr; $NHR_5$; $NR_5R_6$; OH; Cl; Br, CN, OAr; $NO_2$; $SO_2OAr$; Me; and, NHCOC (R1) $=CH_2$, wherein $R_5$ and $R_6$ are independently selected from C1-C8 branched, cyclic or linear alkyl which may be substituted by OH, OMe, Cl or CN. Further, it is preferred that in this anthraquinione class the dye has one $SO_3^-$ group and the $SO_3^-$ group is at the 2 position. In addition, it is preferred that in this anthraquinione class the 4 position is substituted with a substituent selected from: $NH_2$; $NHR_5$; NHAr, where Ar is phenyl or substituted phenyl, and the 5 and 8 position are H.

Preferred dye monomers include:

| | |
|---|---|
| 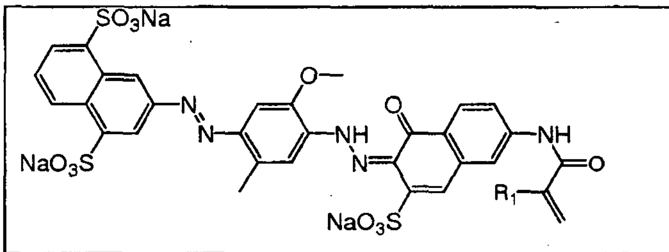 | 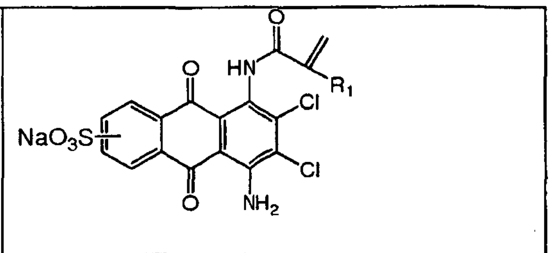 |
| 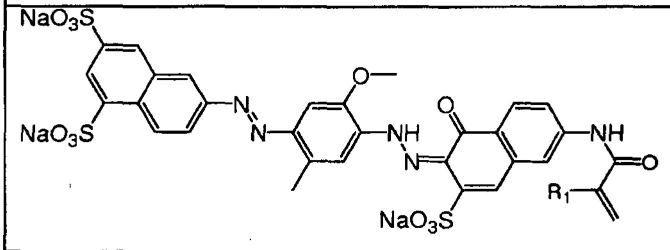 | 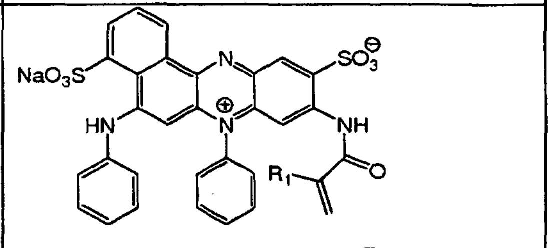 |
| 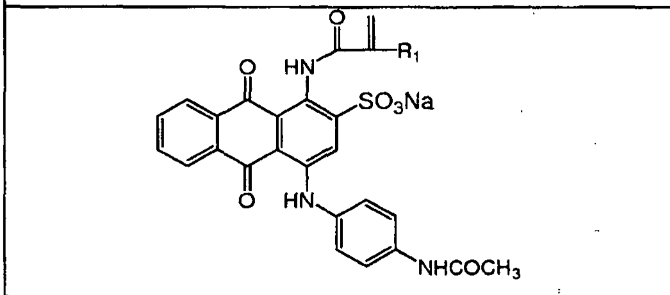 | 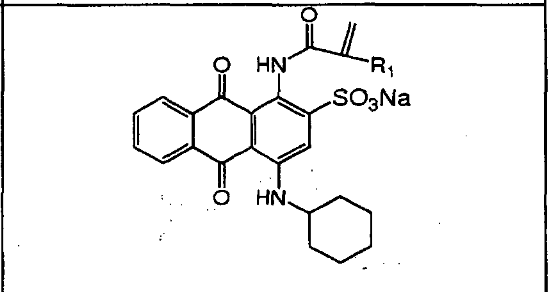 |
| 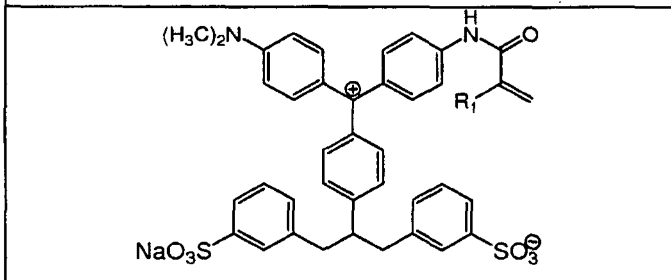 | 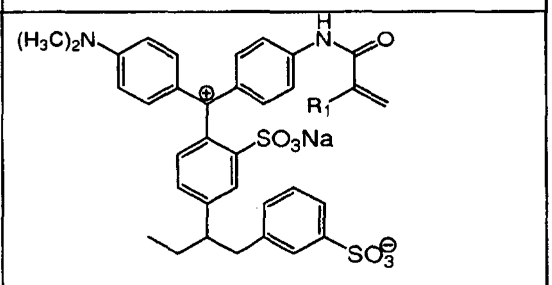 |
| 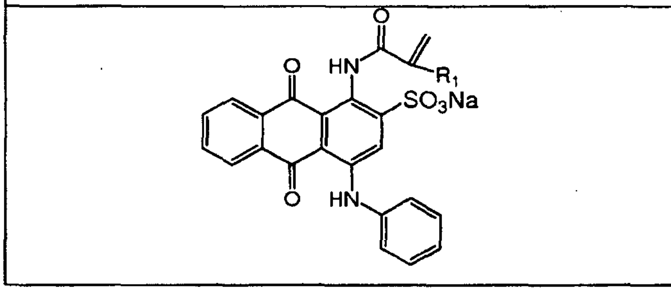 | 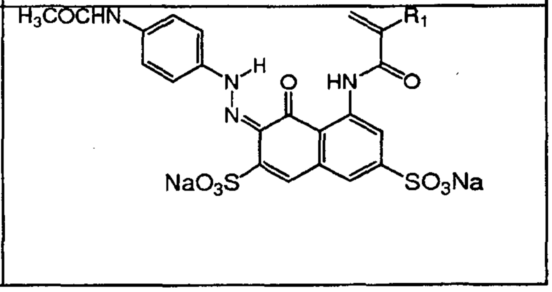 |

Most preferably the dye is an anthraquinone.

<u>ALKENE COMONOMERS</u>

The alkene co-monomer may be selected from any suitable alkene. The comonomer is preferably of the form:

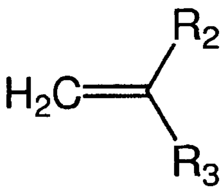 and 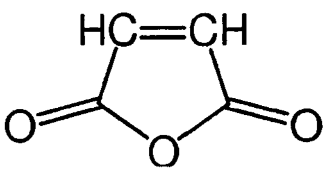

wherein $R_2$ and $R_3$ are independently selected from: H, C1-C8 branched, cyclic and linear alkyl chains, C(O)OH, $CO_2$C1-C18 branched and linear alkyl chains, -C(O)N (C1-C18)2; -C(O)N(C1-C18)H; -C(O)NH2; heteroaromatic, phenyl, benzyl, polyether, cyano, Cl and F. Where C1-C18 is specified a preferred range is C1 to C4.

The $R_2$ and $R_3$ of the comonomer may be further substituted by charged and uncharged organic groups having a total molecular weight of less than 400. Preferred uncharged organic groups are selected from: $NHCOCH_3$, $CH_3$, $C_2H_5$, OH, $CH_3O$, $C_2H_5O$, amine, Cl, F, Br, I, $NO_2$, $CH_3SO_2$, and CN.

The phenyl, benzyl and alkyl chains may be substituted by further organic groups selected from: OH; F; Cl; alkoxy (preferably $OCH_3$), $SO_3^-$, COOH, amine, quaternary amine, acid amide and ester. When phenyl or benzyl groups are present, the aromatic is not substituted by OH.

Examples of suitable co-monomers include. Examples of suitable co-monomers include. Preferred co-monomer are indicated.

| | | |
|---|---|---|
| 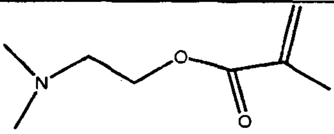 DMAEMA preferred | 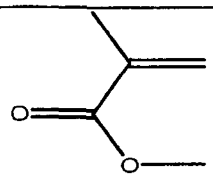 methyl methacrylate | 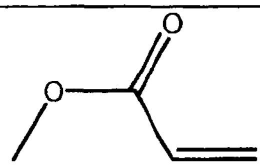 methyl acrylate |
| 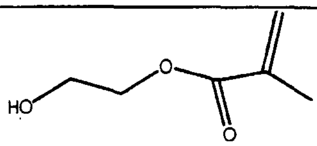 HEMA preferred | 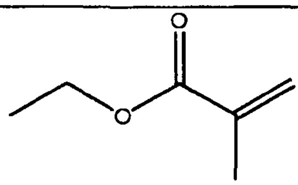 ethyl methacrylate | 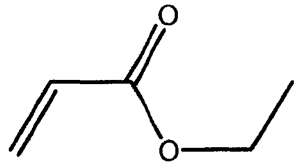 ethyl acrylate |
| 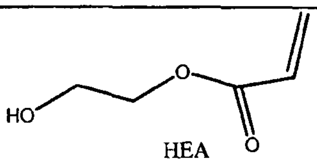 HEA preferred | 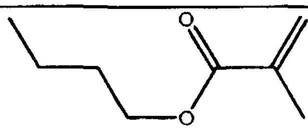 butyl methacrylate | 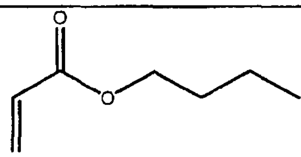 butyl acrylate |
| 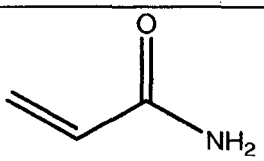 acryl amide Preferred | 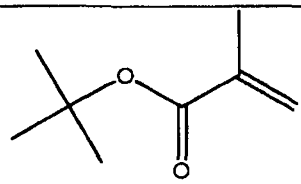 t-butyl methacrylate | 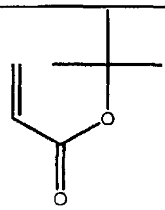 t-butyl acrylate |
| 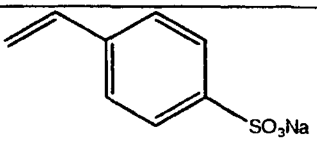 sodium 4-vinylbenzenesulfonate preferred | 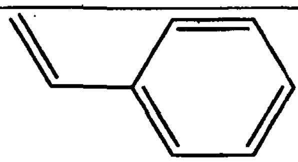 styrene | 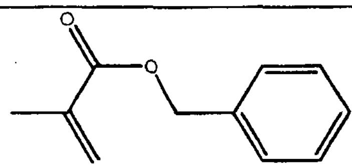 benzyl methacrylate |

| | | |
|---|---|---|
| 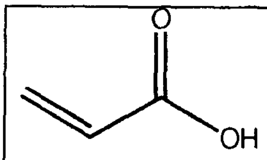 acrylic acid<br>preferred | 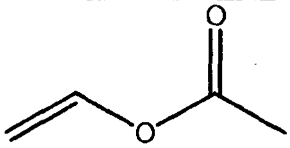 vinyl acetate | 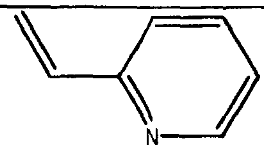 vinyl pyridine |
| 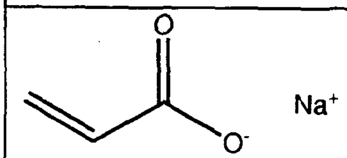 sodium acrylic acid<br>preferred | 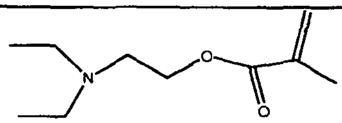 DEAEMA<br>preferred | 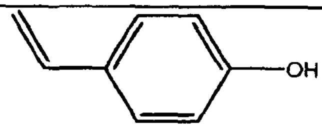 4-vinylphenol |
| 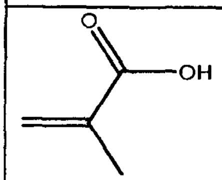 methacrylic acid<br>preferred | 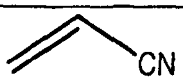 acrylonitrile | 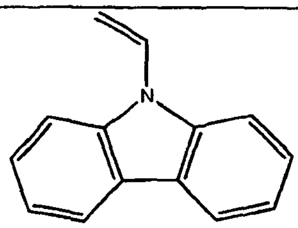 9-vinyl-9*H*-carbazole |
| 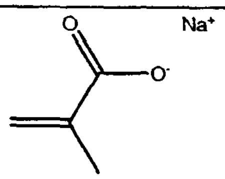 sodium methacrylic acid<br>preferred | 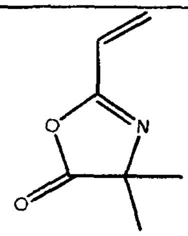 4,4-dimethyl-2-vinyloxazol-5(4*H*)-one | 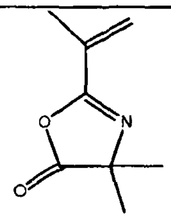 4,4-dimethyl-2-(prop-1-en-2-yl)oxazol-5(4*H*)-one |
| 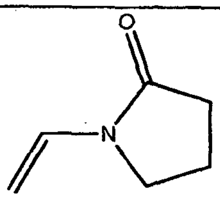 vinyl pyrrolidone<br>Preferred | 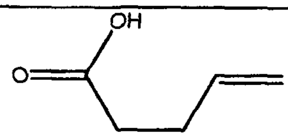 4-Pentenoic acid | 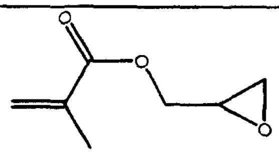 glycidyl methacrylate |
| 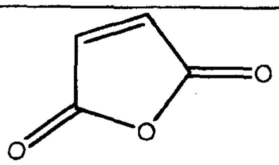 Maleic anhydride | 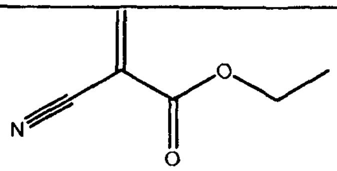 Ethyl 2-cyanoacrylate | 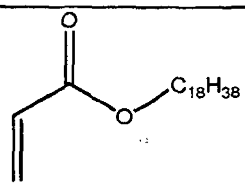 stearyl acrylate |

| preferred | | |
|---|---|---|
| 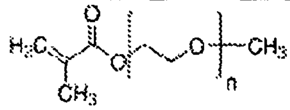<br>**Poly(ethylene glycol) methyl ether methacrylate** | 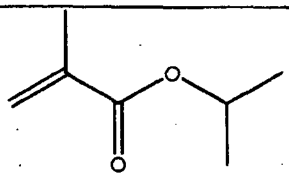<br>isopropyl methacrylate | 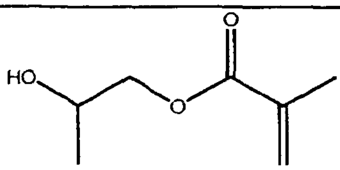<br>2-hydroxypropyl methacrylate |
| 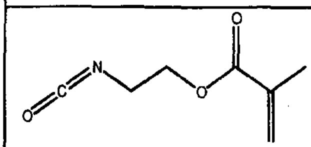<br>2-Isocyanatoethyl methacrylate | 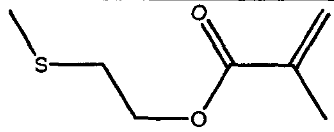<br>2-(Methylthio)ethyl methacrylate | 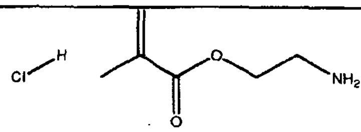<br>2-Aminoethyl methacrylate hydrochloride<br>Preferred |
| 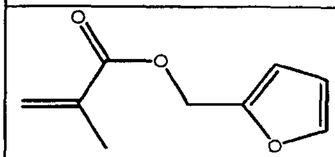<br>Furfuryl methacrylate | 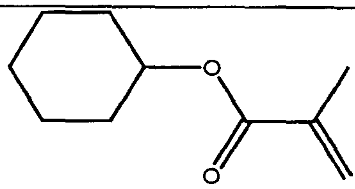<br>Cyclohexyl methacrylate | 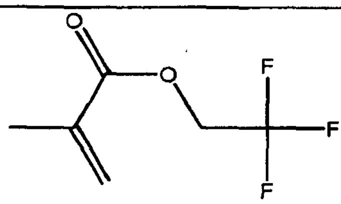<br>2,2,2-Trifluoroethyl methacrylate |
| 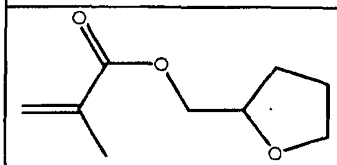<br>Tetrahydrofurfuryl methacrylate | 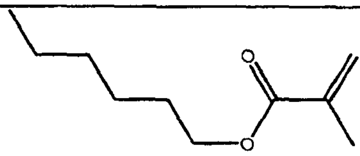<br>Hexyl methacrylate | 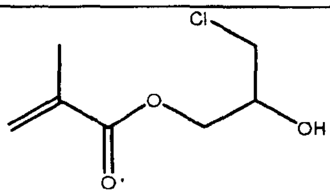<br>3-Chloro-2-hydroxypropyl methacrylate |
| 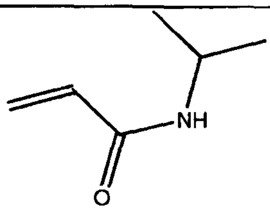<br>*N*-isopropylacrylamide<br>preferred | 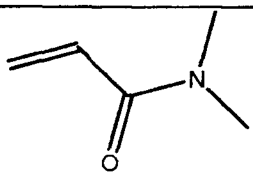<br>*N*,*N*-dimethylacrylamide<br>preferred | 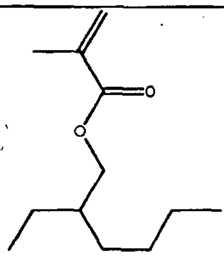<br>2-ethylhexyl methacrylate |
| 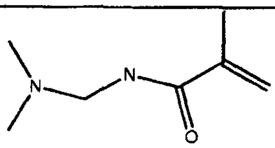<br>2-(dimethylamino)ethyl methacrylamide<br>preferred | 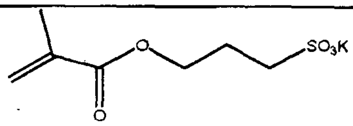<br>Potassium 3-sulfopropyl methacrylate<br>preferred | 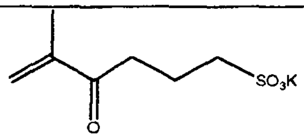<br>potassium 5-methyl-4-oxohex-5-ene-1-sulfonate<br>preferred |

| | | |
|---|---|---|
| 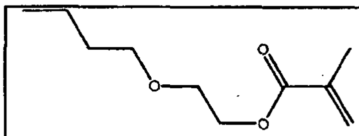 2-Butoxyethyl methacrylate | 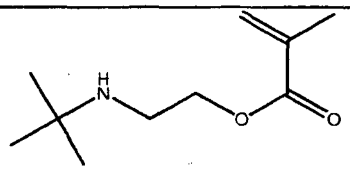 2-(tert-Butylamino)ethyl methacrylate | 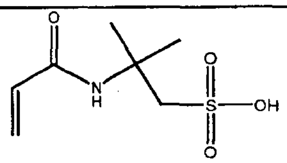 2-acrylamido-2-methyl-1-propanesulfonic acid |
| 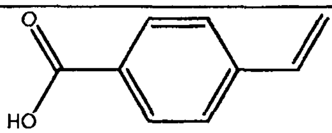 4-vinylbenzic acid<br>preferred | 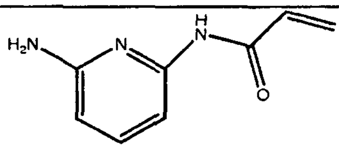 *N*-(6-aminopyridin-2-yl)acrylamide | 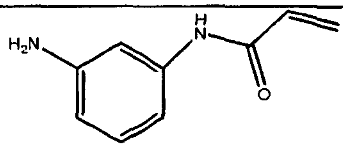 *N*-(3-aminophenyl)acrylamide |
| 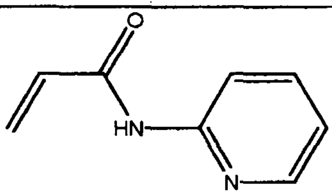 2-acrylamido pyridine | 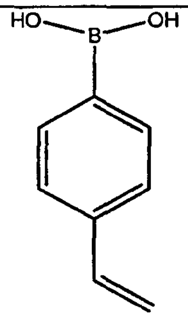 4-vinylphenylboronic acid | 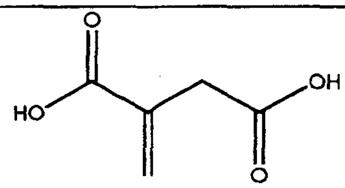 Itaconic acid<br>preferred |
| 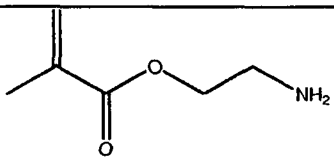 2-AMINOETHYL methacrylate<br>preferred | 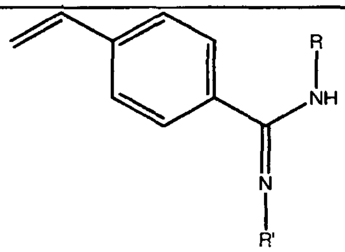 preferred | 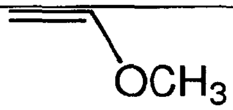 preferred |

Mixtures of co-monomer may be used. It is preferred that the >50wt%, more preferably >80wt%, of the co-monomers are selected from co-monomer that have a molecular weight of less than 300 and contains an amine, amide, OH, $OCH_3$ $SO_3^-$ or $COO^-$ group. Most preferably, the co-monomers contain an amine or $OCH_3$ group.

Most preferably >50wt% of the comonomers are acrylates with pendant tertiary amine groups, most preferably selected from DMAEMA and DEAEMA.

Additional co-monomer may be added to the polymer which are covalently bound to radical photobleaches such as vitamin K3 or 2-ethyl anthraquinone. Other organic active ingredients such as sunscreens, antifungal agents, bleach catalysts, antimicrobial, antiwrinkle may also be covalently linked to the polymer. Examples of such ingredients are 5-chloro-2-(2,4-dichlorophenoxy)phenol, 6-acetoxy-2,4-dimethyl-m-dioxane, para-aminobenzoic acid, diethanolamine-p-methoxy cinnamate and oxybenzone. Most preferably the ingredient contains an $NH_2$ group and the monomer is created in an analogous manner to the dye monomer. These are preferably present at a lower level than the dye.

DYE POLYMER

Preferably, the dye polymer is blue or violet in colour. Preferably the dye polymer gives a blue or violet colour to the cloth with a hue angle of 250 to 345, more preferably 265 to 330, most preferably 270 to 300. The cloth used to determine the hue angle is white bleached non-mercerised woven cotton sheeting.

The polymer is obtainable by co-polymerisation of the dye monomer with suitable unsaturated organic co-monomers.

Preferably the polymer contains 0.1 to 30 Molar% dye monomers units, more preferably 1 to 15 Molar% dye

monomers units, most preferably 2 to 10 Molar%.

Preferably the polymer contains less than 20 Molar%, more preferably less than 5 Molar% of co-monomers bearing COOH or $SO_3^-$ groups.

The monomers within the polymer may be arranged in any suitable manner. For example as Alternating copolymers possess regularly alternating monomer residues; Periodic copolymers have monomer residue types arranged in a repeating sequence; Random copolymers have a random sequence of monomer residue types; Statistical copolymers have monomer residues arranged according to a known statistical rule; Block copolymers have two or more homopolymer subunits linked by covalent bonds. Most preferably the polymer is a random copolymer. The polymer should have a molecular weight 500 and greater, preferably 2000 and greater, preferably 5000 and greater. In this context the molecular weight is the number average molecular weight. This is the ordinary arithmetic mean of the molecular weights of the individual macromolecules. It is determined by measuring the molecular weight of j polymer molecules, summing the weights, and dividing by j. Molecular weights are determined by Gel Permeations Chromatography.

It is preferred that the dye-polymer is soluble in surfactant solution. Specifically that at 1g/L sodium dodecyl sulfate aqueous solution at pH=7 the dye polymer has a solubility of greater than 1mg/L, preferably greater than 10mg/L. Water solubility is enhanced by the presence of hydroxy, amino and charged groups in the polymer, preferably anionic charged groups.

Preferably the polymer is of the form:

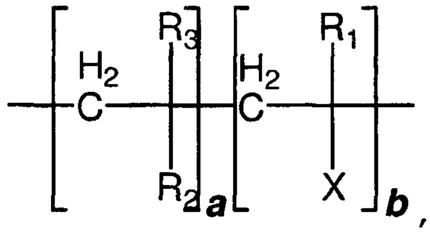

wherein X = Y-Dye.

Preferably, a is greater than b (a>b). More preferably the ratio a:b is from 99.9:0.1 to 70:30.

It is preferred that the dye-polymer has a number average molecular weight in the range from 500 to 500000, preferably from 1000 to 100000, more preferably 5000 to 50000.

For addition to a granular formulation the polymer dye may be added to the slurry to be spray dried or preferably added via post-dosed granules.

In a preferred embodiment the polymer dye powder obtained from the polymer dye synthesis is mixed with a $Na_2SO_4$ or NaCl or pre-prepared granular base or full detergent formulation to give a 0.1 to 20 polymer dye wt% mixture. This dry mix is then mixed into the granular formulation. The polymer dye powder is preferably formed by drying a liquid slurry or solution of the dye, for example by vacuum drying, freeze drying, drying in drum dryers, Spin Flash ® (Anhydro), but most preferably by spray drying. The polymer dye powder may be ground before, during or after the making of the slurry. This grinding is preferably accomplished in mills, such as for example ball, swing, bead or sand mills, or in kneaders. Other ingredients such as dispersants or alkali metal salts may be added to the liquid slurry. The polymer dye powder preferably contains 20 to 100 wt% of the dye.

Preferably, the polymer dye powder has an average particle size, APS, from 0.1 to 300 microns, preferably 10 to 100 microns. Preferably this is as measured by a laser diffraction particle size analyser, preferably a Malvern HP with 100 mm lens.

SURFACTANT

The composition comprises between 2 to 70 wt percent of a surfactant, most preferably 10 to 30 wt %. In general, the nonionic and anionic surfactants of the surfactant system may be chosen from the surfactants described in "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched

alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is the surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts greater than 10%, e.g. 25 to 90 wt % of the surfactant system. Anionic surfactants can be present for example in amounts in the range from about 5% to about 40 wt % of the surfactant system.

In another aspect which is also preferred the surfactant may be a cationic such that the formulation is a fabric conditioner.

CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

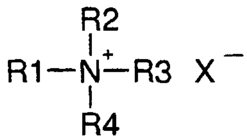

in which $R^1$ is a $C_{12}$ to $C_{22}$ alkyl or alkenyl chain; $R^2$, $R^3$ and $R^4$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

In a preferred detergent composition the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

BUILDERS OR COMPLEXING AGENTS

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate.

## FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-l,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

## PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

## POLYMERS

The composition may comprise one or more polymers. Examples are carboxymethylcellulose, poly (ethylene

glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

ENZYMES

The laundry treatment composition may contain an enzyme. Preferred enzymes are disclosed in WO 2007/087243 and WO 2007/087257.

**Examples**

**Example 1 Polymer Synthesis**

The dye monomer shown in the scheme below was prepared by the reaction of Acid Blue 25 (CI:62055) and acryloyl chloride (2-propenoyl chloride) in the presence of sodium dicarbonate. Methacryloyl chloride (2-methylprop-2-enoyl chloride) also functions well to provide similar dye monomers.

Dye polymers were created via radical polymerisation of the dye monomer with dimethyl amino ethyl methacrylate (DMAEMA) according to the reaction scheme:

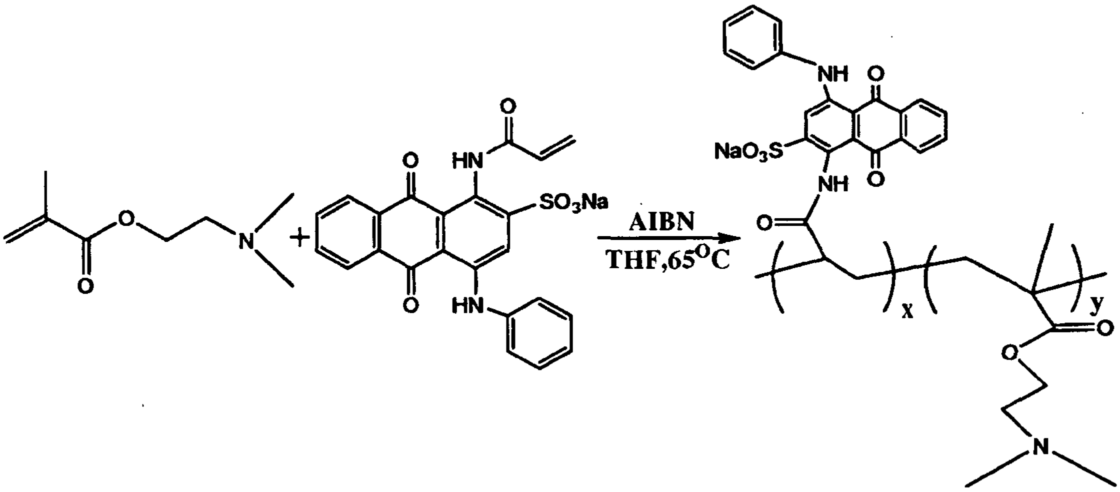


**Example 2 UV-VIS spectroscopy**

The UV-Vis spectra of the dye polymers of example 1 were recorded in demineralised water at 1g/L dye polymer. The UV-Vis spectra of the dye polymers of example 3 were recorded in demineralised water at 1g/L dye polymer and containing 1g/L of linear alkly benzene sulphonate surfactant (LAS). The results are given in the tables below and an identifying code given to each polymer.

| Monomer 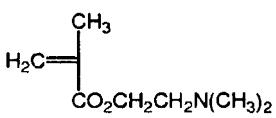 | Dye-monomer 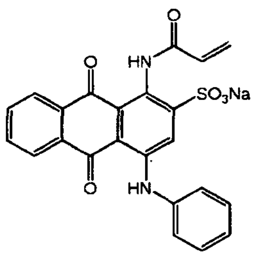 | code | λmax in range 400-700nm | Absorbance (1cm) @ λmax for 1g/L in 1g/L LAS |
|---|---|---|---|---|
| 95 | 5 | P4 | 551 | 0.76 |
| 90 | 10 | P5 | 534 | 1.37 |

**Example 3: Dye deposition experiment**

Knitted white polyester (microfiber), knitted nylon-elastane (80:20) and white woven non-mercerised cotton fabrics were used together in 4g/L of a detergent which contained 15% Linear Alkyl benzene sulfonate (LAS) surfactant, 30% $Na_2CO_3$, 40% NaCl, remainder minors included calcite and fluorescer and moisture. Washes were conducted in 6° French Hard water at room temperature with a liquor to cloth ratio of 30:1, for 30 minutes. This was then repeated once more to accomplish 2 washes in total. Following the washes the cloths were rinsed twice in water, dried, their reflectance spectrum measured on a reflectometer and the colour expressed as CIE L* a* b* values (UV-excluded).
The experiment was repeated with the addition of the dye polymers of example 2. The polymers were added to give 5ppm in the wash solution. The deposition of the dye-polymers to the fabrics was expressed as the $\Delta$b value such that $\Delta$b = b(control) -b(dye polymer) +ve values indicate a blueing of the fabric, due to dye-polymer deposition.

| Dye-polymer | $\Delta$b 2$^{nd}$ wash | | |
|---|---|---|---|
| | Cotton | Nylon elastane | polyester |
| P4 | 1.2 | 1.8 | 0.2 |
| P5 | 1.1 | 1.1 | 0.3 |

The dye-polymers deposit to nylon-elastane, cotton and polyester fabrics.
An added advantage is that the dye-polymer also facilitates soil removal and alter fabric feel.

**Example 4 soil removal**

Knitted white polyester (microfiber), white woven non-mercerised cotton fabrics and a sebum stain monitor [WFK 10 D (Cotton). (Supplied by WFK-Testgewebe GmbH, Adlerstr. 42, D-4150)] were washed together in 4g/L of a detergent which contained 15% Linear Alkyl benzene sulfonate (LAS) surfactant, 30% $Na_2CO_3$, 40% NaCl, remainder minors included calcite and fluorescer and moisture. Washes were conducted in 6° French Hard water at room temperature with a liquor to cloth ratio of 30:1, for 30 minutes. Following the washes the cloths were rinsed twice in water, dried, their reflectance spectrum measured on a reflectometer (UV-excluded).
The experiment was repeated with the addition of 1ppm in the wash solution of dye polymer P4 of example 3.
The soil removal on the WFK10D cloth was measured as the change in %Reflectance at 460nm before and after washing:

$$\Delta R_{460} = R_{460}(\text{after wash}) - R_{460}(\text{before wash}).$$

The experiments were repeated 4 times and the average values of $\Delta R_{460}$ calculated. The results were
$\Delta R_{460}$ (control) = 5.0
$\Delta R_{460}$ (P4) = 5.9
The dye polymer p4 increases the soil removal.

**Exemplary Base Powder Formulations A, B, C and D**

| **Formulation** | **A** | **B** | **C** | **D** |
|---|---|---|---|---|
| NaLAS | 15 | 20 | 10 | 14 |
| NI (7EO) | - | - | - | 10 |
| Na lauryl sulfate | - | 2 | - | 1 |
| Na tripolyphosphate | - | 15 | - | - |
| Soap | - | - | - | 2 |
| Zeolite A24 | 7 | - | - | 17 |
| Sodium silicate | 5 | 4 | - | 1 |

(continued)

| Formulation | A | B | C | D |
|---|---|---|---|---|
| Sodium carbonate | 25 | 20 | 30 | 20 |
| Sodium sulphate | 40 | 33 | 40 | 22 |
| Carboxymethylcellulose | 0.2 | 0.3 | - | 0.5 |
| Sodium chloride | - | - | 5 | 5 |
| lipase | 0.005 | 0.01 | - | 0.005 |
| Protease | 0.005 | 0.01 | - | 0.005 |
| Amylase | 0.001 | 0.003 | - | - |
| Cellulase | - | 0.003 | - | - |
| Acid Violet 50 | 0.0015 | 0.0024 | - | - |
| Disperse violet 28 | 0.003 | - | 0.003 | - |
| P4 (see example 2) | 0.0125 | 0.018 | 0.0085 | 0.020 |
| Fluorescer | 0.1 | 0.15 | 0.05 | 0.3 |
| Water/impurities/ minors | remainder | remainder | remainder | remainder |

Disperse violet 28 is Dianix Brilliant Violet B, ex DyStar,as received.

**Exemplary Base Liquid Formulations A, B, C and D**

| Formulation | A | B | C | D |
|---|---|---|---|---|
| NaLAS | 14 | 10 | 15 | 21 |
| NI (7EO) | 10 | 5 | 21 | 15 |
| SLES (3EO) | 7 | 10 | 7 | - |
| Soap | 2 | 4 | 1 | 0 |
| Citric acid | 1 | 1 | - | 1 |
| glycerol | 0 | 1 | 5 | 0 |
| Propylene glycol | 5 | 3 | 0 | 4 |
| Sodium chloride | 1 | - | - | - |
| Amine ethoxylated polymers | 0.5 | 1 | - | - |
| Triethanol amine | 0 | 0.5 | 3 | 1 |
| perfume | 0.2 | 0.1 | 0.3 | 0.4 |
| Protease | 0.005 | 0.01 | - | 0.005 |
| Amylase | 0.001 | 0.003 | - | - |
| lipase | - | 0.003 | - | - |
| Fluorescer | 0.1 | 0.15 | 0.05 | 0.3 |
| P4 (see example 2) | 0.005 | 0.02 | 0.01 | 0.0125 |
| Solvent Violet 13 | - | 0.0005 | 0 | 0.001 |
| Water/impurities/ minors | remainder | remainder | remainder | remainder |

For both powder and liquids formulations, enzyme levels are given as percent pure enzyme. NI(7EO) refers to R-$(OCH_2CH_2)_nOH$, where R is an alkyl chain of C12 to C15, and n is 7. NaLAS is linear alkyl benzene sulphonate (LAS) and (SLES(3EO)) is $C_{12}$-$C_{18}$ alkyl polyethoxylate (3.0) sulphate. Formulations were made using Lipex as the lipase, Savinase and Polarzyme and the protease, Carezyme as the cellulose and Stainzyme as the amylase.

## Claims

1. A laundry detergent composition comprising from 2 to 70 wt % of a surfactant together with from 0.0001 to 50 wt% of a blue or violet dye-polymer of molecular weight of at least 500, wherein the dye-polymer is obtainable by polymerisation of:

   (a) a dye monomer, the dye monomer comprising an alkene covalently bound to a dye, the dye covalently bound to a group selected from: $SO_3^-$ and $CO_2^-$, the dye monomer having a molar extinction coefficient at a wavelength in the range 400 to 700nm of at least 1000 $mol^{-1}$ L $cm^{-1}$, and
   (b) one or more further alkene comonomer(s), the alkene monomer(s) having molar extinction coefficient at a wavelength in the range 400 to 700nm that is less than 100 $mol^{-1}$ L $cm^{-1}$.

2. A detergent composition according to claim 1, wherein the dye monomer is of the form:

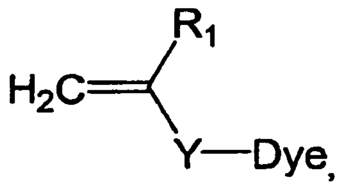

   wherein Y is an organic bridging group covalently connecting a dye to the alkene moiety of the dye monomer and $R_1$ is selected from: alkyl; aryl; benzyl; halogen; ester; acid amide; and, CN.

3. A detergent composition according to claim 2, wherein the organic bridging group is selected from: -$CONR_4$-; -$NR_4CO$-; -$COOR_4$-; -$NR_4$-; -O-; -S-; -$SO_2$-; -$SO_2NR_4$-; -N$(COR_4)$-; and - N$(SO_2R_4)$-; wherein $R_4$ is selected from: H; C1-C6 branched or linear alkyl; phenyl and benzyl groups; wherein R4 has 0 to 1 spacing units selected from: -O-; -S-; -$SO_2$-; -C(O)O-; - OC(O)-; and an amine.

4. A detergent composition according to claim 2, wherein the organic bridging group is selected from: -$NR_4CO$- and -$CONR_4$-.

5. A detergent composition according to any one of claims 2 to 4, wherein $R_4$ is selected: from: H and Me.

6. A detergent composition according to any one of claims 2 to 5, wherein the Y group is bound directly to a carbon atom of an aromatic ring of the dye.

7. A detergent composition according to any one of the preceding claims, wherein the dye is an organic dye selected from the following chromophore classes: anthraquinone; azo; azine; triphenodioxazine; triphenyl methane; xanthene; and, phthalocyanin.

8. A detergent composition according to claim 7, wherein the organic dye is selected from the following chromophore classes: azo; anthraquinone; and, azine chromophore classes.

9. A detergent composition according to any one of the preceding claims, wherein $R_1$ is selected from: H; Me; Et; Pr; $CO_2$Cl-C4 branched and linear alkyl chains; phenyl; benzyl; CN; Cl; and, F.

10. A detergent composition according to claim 9, wherein $R_1$ is selected from: H; and, Me.

11. A detergent composition according to any one of the preceding claims, wherein the dye-monomer is selected from:

acid violet 1; acid violet 3; acid violet 6; acid violet 11; acid violet 13; acid violet 14; acid violet 19; acid violet 20; acid violet 36; acid violet 36:1; acid violet 41; acid violet 42; acid violet 43; acid violet 50; acid violet 51; acid violet 63; acid violet 48; acid blue 25; acid blue 40; acid blue 40:1; acid blue 41; acid blue 43; acid blue 45; acid blue 47; acid blue 49; acid blue 51; acid blue 53; acid blue 56; acid blue 61; acid blue 61:1; acid blue 62; acid blue 69; acid blue 78; acid blue 81:1; acid blue 92; acid blue 96; acid blue 108; acid blue 111; acid blue 215; acid blue 230; acid blue 277; acid blue 344; acid blue 117; acid blue 124; acid blue 129; acid blue 129:1; ; acid blue 138; acid blue 145; direct violet 99; direct violet 5; direct violet 72; direct violet 16; direct violet 78; direct violet 77; direct violet 83; food black 2; direct blue 33; direct blue 41; direct blue 22; direct blue 71; direct blue 72; direct blue 74; direct blue 75; direct blue 82; direct blue 96; direct blue 110; direct blue 111; direct blue 120; direct blue 120:1; direct blue 121; direct blue 122; direct blue 123; direct blue 124; direct blue 126; direct blue 127; direct blue 128; direct blue 129; direct blue 130; direct blue 132; direct blue 133; direct blue 135; direct blue 138; direct blue 140; direct blue 145; direct blue 148; direct blue 149; direct blue 159; direct blue 162; direct blue 163; and, food black 1 where the acid amide group is replaced by $NH_2$, wherein the one -NH2 of the dye is converted to -NH-C(O)-CH=CH2 or -NH-C (O)-C(Me)=CH2.

**12.** A detergent composition according to claim 2 to 10, wherein the dye-monomer is selected from the anthraquinione:

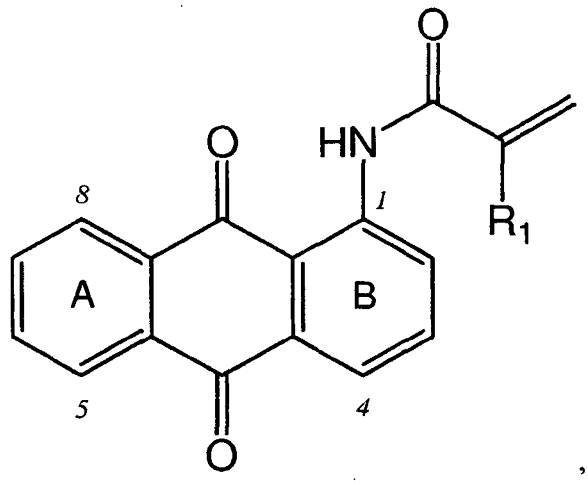

,

wherein the anthraquinione carries at least one sulphonate.

**13.** A detergent composition according to claim 12, wherein the A and B ring are further substituted by one or more groups selected from: $NH_2$; NHAr; $NHR_5$; $NR_5R_6$; OH; Cl; Br, CN, OAr; $NO_2$; $SO_2OAr$; Me; and, NHCOC (R1) $=CH_2$, wherein $R_5$ and $R_6$ are independently selected from C1-C8 branched, cyclic or linear alkyl which may be substituted by OH, OMe, Cl or CN.

**14.** A detergent composition according to claim 12, wherein the dye has one $SO_3^-$ group and the $SO_3^-$ group is at the 2 position.

**15.** A detergent composition according to claim 14, wherein the 4 position is substituted with a substituent selected from: $NH_2$; $NHR_5$; NHAr, where Ar is phenyl or substituted phenyl, and the 5 and 8 position are H.

**16.** A detergent composition according to any one of the preceding claims, wherein the comonomer is selected from:

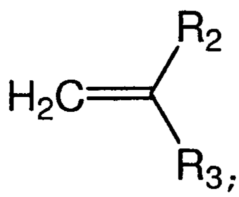

; and,

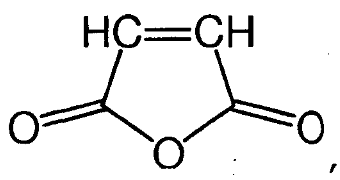

,

wherein $R_2$ and $R_3$ are independently selected from: H, C1-C8 branched, cyclic and linear alkyl chains, C (O) OH, $CO_2$Cl-C18 branched and linear alkyl chains, -C(O)N (C1-C18)2; -C(O)N(C1-C18)H; -C(O)NH2; heteroaromatic, phenyl, benzyl, polyether, cyano, Cl and F.

**17.** A detergent composition according to claim 16, wherein $R_2$ and $R_3$ of the comonomer is further substituted by groups selected from: charged; and, uncharged organic, the further groups having a total molecular weight of less than 400.

**18.** A detergent composition according to any one of the preceding claims, wherein detergent composition comprises a fluorescent agent.

**19.** A detergent composition according to any one of the preceding claims, wherein detergent composition is granular.

**20.** A domestic method of treating a textile, the method comprising the steps of:

(i) treating a textile with an aqueous solution of the dye-polymer as defined in any one of claims 1 to 17, the aqueous solution comprising from 10 to 100 ppm of the dye-polymer; and, from 0.3 g/L to 3 g/L of a surfactant;
(ii) optionally rinsing; and,
(iii) drying the textile.

**Patentansprüche**

**1.** Waschmittelzusammensetzung für Wäschereien,
die 2 bis 70 Gew.-% eines Tensids zusammen mit 0,0001 bis 50 Gew.-% eines blauen oder violetten Farbstoffpolymers mit einem Molekulargewicht von mindestens 500 aufweist, wobei das Farbstoffpolymer durch Polymerisieren von Folgendem erhalten werden kann:

(a) einem Farbstoffmonomer, wobei das Farbstoffmonomer ein an einen Farbstoff kovalent gebundenes Alken enthält, wobei der Farbstoff kovalent an einen Rest gebunden ist, der aus $SO_3^-$ und $CO_2^-$ ausgewählt ist, wobei das Farbstoffmonomer einen molaren Extinktionskoeffizienten bei einer Wellenlänge im Bereich von 400 bis 700 nm von mindestens 1000 $L \cdot mol^{-1} \cdot cm^{-1}$ hat, und
(b) einem oder mehreren weiteren Alkencomonomeren, wobei das (die) Alkencomonomer(e) einen molaren Extinktionskoeffizienten bei einer Wellenlänge im Bereich von 400 bis 700 nm aufweist, der kleiner als 100 $L.mol^{-1}.cm^{-1}$ ist.

**2.** Waschmittelzusammensetzung nach Anspruch 1,
wobei das Farbstoffmonomer die folgende Formel hat:

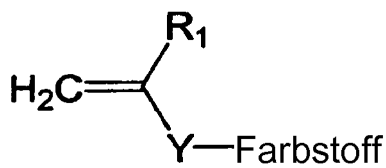

worin Y ein organischer Brückenrest ist, der einen Farbstoff kovalent an die Alken-Einheit des Farbstoffmonomers bindet, und $R_1$ aus Alkyl, Aryl, Benzyl, Halogen, Ester, Säureamid und CN ausgewählt ist.

**3.** Waschmittelzusammensetzung nach Anspruch 2,
wobei der organische Brückenrest ausgewählt ist aus: $-CONR_4-$, $-NR_4CO-$, $-COOR_4-$, $-NR_4-$, -O-, -S-, $-SO_2-$, $-SO_2NR_4-$, $-N(COR_4)-$und $-N(SO_2R_4)-$, worin $R_4$ ausgewählt ist aus H, verzweigtem oder linearem $C_1$-$C_6$-Alkyl, Phenyl- und Benzylgruppen, wobei $R_4$ 0 bis 1 Zwischen-Einheiten aufweist, die aus -O-, -S-, $-SO_2-$, -C(O)O-, -OC (O)- und einem Amin ausgewählt sind.

**4.** Waschmittelzusammensetzung nach Anspruch 2,
wobei der organische Brückenrest aus $-NR_4CO-$ und $-CONR_4-$ ausgewählt ist.

**5.** Waschmittelzusammensetzung nach einem der Ansprüche 2 bis 4,

wobei $R_4$ aus H und Me ausgewählt ist.

**6.** Waschmittelzusammensetzung nach einem der Ansprüche 2 bis 5,
wobei der Rest Y direkt an ein Kohlenstoffatom eines aromatischen Rings des Farbstoffs gebunden ist.

**7.** Waschmittelzusammensetzung nach einem der vorstehenden Ansprüche, wobei der Farbstoff ein organischer Farbstoff ist, der aus den folgenden Chromophorklassen ausgewählt ist: Anthrachinon, Azo, Azin, Triphendioxazin, Triphenylmethan, Xanthen und Phthalocyanin.

**8.** Waschmittelzusammensetzung nach Anspruch 7,
wobei der organische Farbstoff aus den folgenden Chromophorklassen ausgewählt ist: Azo, Anthrachinon und Azin-Chromophorklassen.

**9.** Waschmittelzusammensetzung nach einem der vorstehenden Ansprüche, wobei $R_1$ ausgewählt ist aus: H, Me, Et, Pr, verzweigten und linearen $CO_2C_1$-$C_4$-Alkylketten, Phenyl, Benzyl, CN, Cl und F.

**10.** Waschmittelzusammensetzung nach Anspruch 9,
wobei $R_1$ aus H und Me ausgewählt ist.

**11.** Waschmittelzusammensetzung nach einem der vorstehenden Ansprüche, wobei das Farbstoffmonomer ausgewählt ist aus: Acid Violet 1, Acid Violet 3, Acid Violet 6, Acid Violet 11, Acid Violet 13, Acid Violet 14, Acid Violet 19, Acid Violet 20, Acid Violet 36, Acid Violet 36:1, Acid Violet 41, Acid Violet 42, Acid Violet 43, Acid Violet 50, Acid Violet 51, Acid Violet 63, Acid Violet 48, Acid Blue 25, Acid Blue 40, Acid Blue 40:1, Acid Blue 41, Acid Blue 43, Acid Blue 45, Acid Blue 47, Acid Blue 49, Acid Blue 51, Acid Blue 53, Acid Blue 56, Acid Blue 61, Acid Blue 61:1, Acid Blue 62, Acid Blue 69, Acid Blue 78, Acid Blue 81:1, Acid Blue 92, Acid Blue 96, Acid Blue 108, Acid Blue 111, Acid Blue 215, Acid Blue 230, Acid Blue 277, Acid Blue 344, Acid Blue 117, Acid Blue 124, Acid Blue 129, Acid Blue 129:1, Acid Blue 138, Acid Blue 145, Direct Violet 99, Direct Violet 5, Direct Violet 72, Direct Violet 16, Direct Violet 78, Direct Violet 77, Direct Violet 83, Food Black 2, Direct Blue 33, Direct Blue 41, Direct Blue 22, Direct Blue 71, Direct Blue 72, Direct Blue 74, Direct Blue 75, Direct Blue 82, Direct Blue 96, Direct Blue 110, Direct Blue 111, Direct Blue 120, Direct Blue 120:1, Direct Blue 121, Direct Blue 122, Direct Blue 123, Direct Blue 124, Direct Blue 126, Direct Blue 127, Direct Blue 128, Direct Blue 129, Direct Blue 130, Direct Blue 132, Direct Blue 133, Direct Blue 135, Direct Blue 138, Direct Blue 140, Direct Blue 145, Direct Blue 148, Direct Blue 149, Direct Blue 159; Direct Blue 162; Direct Blue 163 und Food Black 1, wobei die Säureamidgruppe durch $NH_2$ ersetzt ist, wobei die eine Gruppe $-NH_2$ des Farbstoffs in $-NH-C(O)-CH=CH_2$ oder $-NH-C(O)-C(Me)=CH_2$ überführt ist.

**12.** Waschmittelzusammensetzung nach den Ansprüchen 2 bis 10,
wobei das Farbstoffmonomer aus dem Anthrachinion:

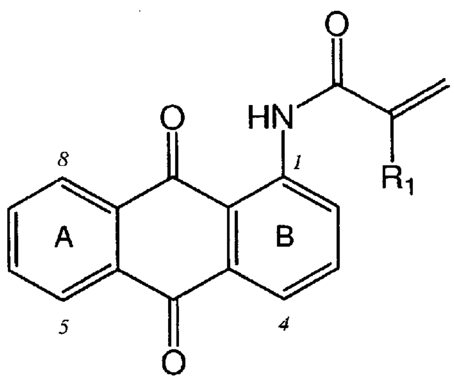

ausgewählt ist, wobei das Anthrachinion zumindest ein Sulfonat aufweist.

**13.** Waschmittelzusammensetzung nach Anspruch 12,
wobei die Ringe A und B ferner mit einem oder mehreren Resten substituiert sind, die ausgewählt sind aus: $NH_2$, NHAr, $NHR_5$, $NR_5R_6$, OH, Cl, Br, CN, OAr, $NO_2$, $SO_2OAr$, Me und $NHCOC(R_1)=CH_2$, wobei $R_5$ und $R_6$ unabhängig voneinander aus verzweigtem, cyclischem oder linearem $C_1$-$C_8$-Alkyl ausgewählt sind, das mit OH, OMe, Cl oder

CN substituiert sein kann.

**14.** Waschmittelzusammensetzung nach Anspruch 12,
wobei der Farbstoff einen $SO_3^-$-Rest aufweist und der $SO_3^-$-Rest in der 2-Position vorliegt.

**15.** Waschmittelzusammensetzung nach Anspruch 14,
wobei die 4-Position mit einem Substituenten substituiert ist, der ausgewählt ist aus: $NH_2$, $NHR_5$, NHAr, wobei Ar Phenyl oder substituiertes Phenyl ist, und die 5- und 8-Position H sind.

**16.** Waschmittelzusammensetzung nach einem der vorstehenden Ansprüche, wobei das Comonomer ausgewählt ist aus:

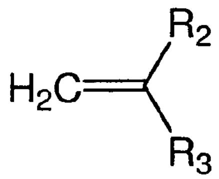 und 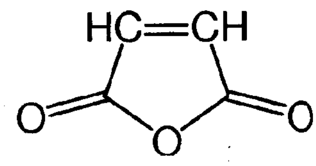

worin $R_2$ und $R_3$ unabhängig voneinander ausgewählt sind aus: H, verzweigten, cyclischen und linearen $C_1$-$C_8$-Alkylketten, C(O)OH, verzweigten und linearen $CO_2C_1$-$C_{18}$-Alkylketten, -C(O)N($C_1$-$C_{18}$)$_2$, -C(O)N($C_1$-$C_{18}$)H, -C(O)$NH_2$, einem heteroaromatischen Rest, Phenyl, Benzyl, Polyether, Cyano, Cl und F.

**17.** Waschmittelzusammensetzung nach Anspruch 16,
wobei $R_2$ und $R_3$ des Comonomers ferner mit Resten substituiert sind, die aus geladenen und ungeladenen organischen Resten ausgewählt sind, wobei die weiteren Reste ein gesamtes Molekulargewicht von weniger als 400 aufweisen.

**18.** Waschmittelzusammensetzung nach einem der vorstehenden Ansprüche, wobei die Waschmittelzusammensetzung einen Fluoreszenzstoff aufweist.

**19.** Waschmittelzusammensetzung nach einem der vorstehenden Ansprüche, wobei die Waschmittelzusammensetzung körnig ist.

**20.** Verfahren zum Behandeln eines Textilmaterials im Haushalt,
wobei das Verfahren die folgenden Schritte aufweist:

(i) Behandeln eines Textilmaterials mit einer wässrigen Lösung des Farbstoffpolymers nach einem der Ansprüche 1 bis 17, wobei die wässrige Lösung 10 ppb bis 100 ppm des Farbstoffpolymers und 0,3 bis 3 g/l eines Tensids aufweist;
(ii) gegebenenfalls Spülen und
(iii) Trocknen des Textilmaterials.

## Revendications

**1.** Composition détergente de blanchissage, comprenant 2 % à 70 % en poids d'un tensioactif avec de 0,0001 % à 50 % en poids d'un polymère colorant bleu ou violet ayant un poids moléculaire d'au moins 500, dans laquelle le polymère colorant peut être obtenu par la polymérisation :

(a) d'un monomère colorant, le monomère colorant comprenant un alcène lié par liaison covalente à un colorant, le colorant étant lié par liaison covalente à un groupe sélectionné parmi : $SO_3^-$ et $CO_2^-$, le monomère colorant présentant un coefficient d'extinction molaire à une longueur d'onde située dans la plage allant de 400 nm à 700 nm d'au moins 1000 $mol^{-1}$ 1 $cm^{-1}$, et
(b) d'un ou de plusieurs autres comonomères d'alcène, le ou les comonomères d'alcène présentant un coefficient d'extinction molaire à une longueur d'onde située dans la plage allant de 400 nm à 700 nm qui est inférieur à 100 $mol^{-1}$ 1 $cm^{-1}$.

2. Composition détergente selon la revendication 1, dans laquelle le monomère colorant se présente sous la forme suivante :

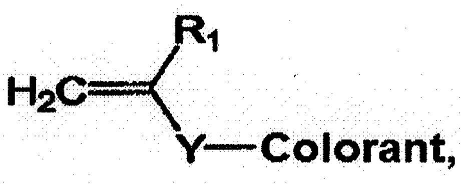

où Y est un groupe organique de pontage reliant par liaison covalente un colorant au fragment alcène du monomère colorant et $R_1$ est sélectionné parmi : un alkyle ; un aryle ; un benzyle ; un halogène ; un ester ; un amide d'acide ; et CN.

3. Composition détergente selon la revendication 2, dans laquelle le groupe organique de pontage est sélectionné parmi : $-CONR_4-$ ; $-NR_4CO-$ ; $-COOR_4-$ ; $-NR_4-$ ; -O- ; -S- ; $-SO_2-$ ; $-SO_2NR_4-$ ; $-N(COR_4)-$ ; et $-N(SO_2R_4)-$ ; où $R_4$ est sélectionné parmi : H ; un alkyle en $C_1$ à $C_6$ linéaire ou ramifié ; les groupes phényle et benzyle ; dans laquelle R4 contient 0 à 1 motif d'espacement sélectionné parmi : -O- ; -S- ; $-SO_2-$ ; -C(O)O- ; - OC(O)- ; et une amine.

4. Composition détergente selon la revendication 2, dans laquelle le groupe organique de pontage est sélectionné parmi : $-NR_4CO-$ et $-CONR_4-$.

5. Composition détergente selon l'une quelconque des revendications 2 à 4, dans laquelle $R_4$ est sélectionné parmi : H et Me.

6. Composition détergente selon l'une quelconque des revendications 2 à 5, dans laquelle le groupe Y est lié directement à un atome de carbone d'un cycle aromatique du colorant.

7. Composition détergente selon l'une quelconque des revendications précédentes, dans laquelle le colorant est un colorant organique sélectionné parmi les classes de chromophores suivantes : anthraquinone ; azo ; azine ; triphénodioxazine ; triphényl méthane ; xanthène ; et phtalocyanine.

8. Composition détergente selon la revendication 7, dans laquelle le colorant organique est sélectionné parmi les classes de chromophores suivantes : les classes azo ; anthraquinone ; et azine de chromophores.

9. Composition détergente selon l'une quelconque des revendications précédentes, dans laquelle $R_1$ est sélectionné parmi : H ; Me ; Et ; Pr ; les chaînes $CO_2$-alkyles en $C_1$ à $C_4$ linéaires ou ramifiées ; un phényle ; un benzyle ; CN ; Cl ; et F.

10. Composition détergente selon la revendication 9, dans laquelle $R_1$ est sélectionné parmi : H ; et Me.

11. Composition détergente selon l'une quelconque des revendications précédentes, dans laquelle le monomère colorant est sélectionné parmi : le violet acide 1 ; le violet acide 3 ; le violet acide 6 ; le violet acide 11 ; le violet acide 13 ; le violet acide 14 ; le violet acide 19 ; le violet acide 20 ; le violet acide 36 ; le violet acide 36 : 1 ; le violet acide 41 ; le violet acide 42 ; le violet acide 43 ; le violet acide 50 ; le violet acide 51 ; le violet acide 63 ; le violet acide 48 ; le bleu acide 25 ; le bleu acide 40 ; le bleu acide 40 : 1 ; le bleu acide 41 ; le bleu acide 43 ; le bleu acide 45 ; le bleu acide 47 ; le bleu acide 49 ; le bleu acide 51 ; le bleu acide 53 ; le bleu acide 56 ; le bleu acide 61 ; le bleu acide 61 : 1 ; le bleu acide 62 ; le bleu acide 69 ; le bleu acide 78 ; le bleu acide 81 : 1 ; le bleu acide 92 ; le bleu acide 96 ; le bleu acide 108 ; le bleu acide 111 ; le bleu acide 215 ; le bleu acide 230 ; le bleu acide 277 ; le bleu acide 344 ; le bleu acide 117 ; le bleu acide 124 ; le bleu acide 129 ; le bleu acide 129 : 1 ; le bleu acide 138 ; le bleu acide 145 ; le violet direct 99 ; le violet direct 5 ; le violet direct 72 ; le violet direct 16 ; le violet direct 78 ; le violet direct 77 ; le violet direct 83 ; le noir alimentaire 2 ; le bleu direct 33 ; le bleu direct 41 ; le bleu direct 22 ; le bleu direct 71 ; le bleu direct 72 ; le bleu direct 74 ; le bleu direct 75 ; le bleu direct 82 ; le bleu direct 96 ; le bleu direct 110 ; le bleu direct 111 ; le bleu direct 120 ; le bleu direct 120 : 1 ; le bleu direct 121 ; le bleu direct 122 ; le bleu direct 123 ; le bleu direct 124 ; le bleu direct 126 ; le bleu direct 127 ; le bleu direct 128 ; le bleu direct 129 ; le bleu direct 130 ; le bleu direct 132 ; le bleu direct 133 ; le bleu direct 135 ; le bleu direct 138 ; le bleu direct 140 ; le bleu direct 145 ; le bleu direct 148 ; le bleu direct 149 ; le bleu direct 159 ;

le bleu direct 162 ; le bleu direct 163 ; et le noir alimentaire 1 où le groupe amide d'acide est remplacé par $NH_2$, dans lequel l'un des $-NH_2$ du colorant est converti en $-NH-C(O)-CH=CH_2$ ou en $-NH-C(O)-C(Me)=CH_2$.

**12.** Composition détergente selon l'une quelconque des revendications 2 à 10, dans laquelle le monomère colorant est sélectionné parmi l'anthraquinione :

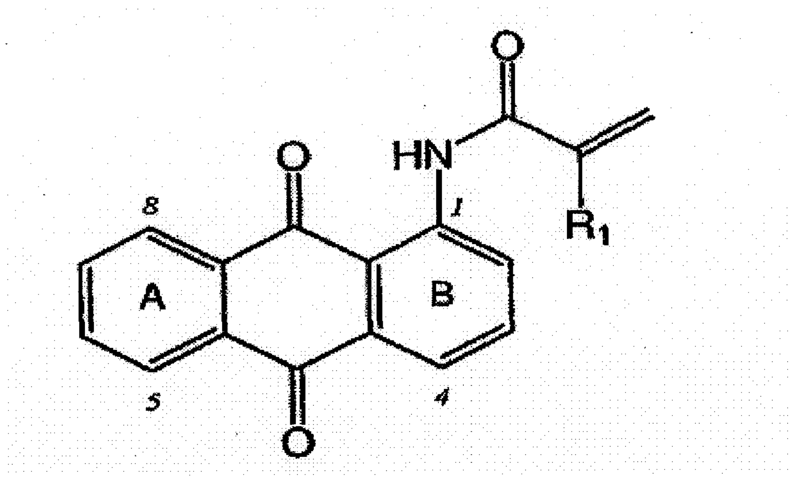

dans laquelle l'anthraquinione porte au moins un sulfonate.

**13.** Composition détergente selon la revendication 12, dans laquelle les cycles A et B sont en outre substitués par un ou plusieurs groupes sélectionnés parmi : $NH_2$ ; NHAr ; $NHR_5$ ; $NR_5R_6$ ; OH ; Cl ; Br, CN, OAr ; $NO_2$ ; $SO_2OAr$ ; Me ; et $NHCOC(R1)=CH_2$, où $R_5$ et $R_6$ sont sélectionnés indépendamment parmi les alkyles en $C_1$ à $C_8$ linéaires, cycliques ou ramifiés qui peuvent être substitués par OH, OMe, Cl ou CN.

**14.** Composition détergente selon la revendication 12, dans laquelle le colorant contient un groupe $SO_3^-$ et le groupe $SO_3^-$ est en position 2.

**15.** Composition détergente selon la revendication 14, dans laquelle la position 4 est substituée par un substituant sélectionné parmi : $NH_2$ ; $NHR_5$ ; NHAr, où Ar est un phényle ou un phényle substitué, et les positions 5 et 8 sont H.

**16.** Composition détergente selon l'une quelconque des revendications précédentes, dans laquelle le comonomère est sélectionné parmi :

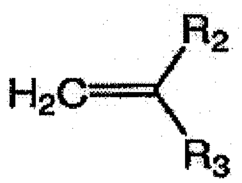 ; et 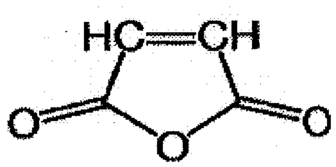 ,

où $R_2$ et $R_3$ sont sélectionnés indépendamment parmi : H, les chaînes alkyles en $C_1$ à $C_8$ linéaires, cycliques ou ramifiées, C(O)OH, les chaînes $CO_2$-alkyles en $C_1$ à $C_{18}$ linéaires ou ramifiées, $-C(O)N(C_1$ à $C_{18})_2$ ; $-C(O)N(C_1$ à $C_{18})H$ ; $-C(O)NH_2$ ; un groupe hétéroaromatique, un phényle, un benzyle, un polyéther, un cyano, Cl et F.

**17.** Composition détergente selon la revendication 16, dans laquelle $R_2$ et $R_3$ du comonomère sont en outre substitués par des groupes sélectionnés parmi : les groupes organiques chargés et non chargés, les groupes supplémentaires possédant un poids moléculaire total inférieur à 400.

**18.** Composition détergente selon l'une quelconque des revendications précédentes, dans laquelle la composition détergente comprend un agent fluorescent.

**19.** Composition détergente selon l'une quelconque des revendications précédentes, dans laquelle la composition détergente est granulaire.

**20.** Méthode domestique de traitement d'un textile, la méthode comprenant les étapes suivantes :

(i) le traitement d'un textile avec une solution aqueuse du polymère colorant tel que défini dans l'une quelconque des revendications 1 à 17, la solution aqueuse comprenant 10 ppb à 100 ppm du polymère colorant ; et de 0,3 g/l à 3 g/l d'un tensioactif ;
(ii) un rinçage facultatif ; et
(iii) le séchage du textile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005003274 A
- WO 2006055787 A
- WO 2009040731 A
- US 3232691 A
- EP 328177 A
- EP 070074 A
- EP 346995 A
- EP 0239910 A
- EP 0384070 A
- WO 2007087243 A
- WO 2007087257 A


### Non-patent literature cited in the description


- Industrial Dyes. Wiley VCH, 2003
- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- Tenside-Taschenbuch. Carl Hauser Verlag, 1981
- CTFA (Cosmetic, Toiletry and Fragrance Association) 1992 International Buyers Guide. CFTA Publications, 1992
- OPD 1993 Chemicals Buyers Directory 80th Annual Edition. Schnell Publishing Co, 1993
- **POUCHER.** *Journal of the Society of Cosmetic Chemists,* 1955, vol. 6 (2), 80